# EUROPEAN PATENT SPECIFICATION

(11) **EP 3 634 615 B1**
(45) Date of publication and mention of the grant of the patent: **14.04.2021**
(21) Application number: 18725863.7
(22) Date of filing: 28.05.2018
(51) Int. Cl.: B01F 15/02, B32B 27/08, B65D 65/40, B65D 81/24, C08J 3/20, C08J 5/18, C08F 10/00

(54) **PROCESS FOR PRODUCING POLYMER BLEND**
VERFAHREN ZUR HERSTLLUNG VON POLYMERMISCHUNGEN
PROCÉDÉ POUR LA MANUFACTURE DE MÉLANGE DE POLYMÈRES

(30) Priority: 30.05.2017 EP 17173476
(43) Date of publication of application: 15.04.2020
(73) Proprietor: SABIC Global Technologies B.V., 4612 PX Bergen op Zoom (NL)
(72) Inventor: MARTENS, Johannes Peter Antonius, 6160 GA Geleen (NL); SCHIPPER, Ronald Julianus Peter, 6160 GA Geleen (NL)
(74) Representative: Sabic Intellectual Property Group
(86) International application number: PCT/EP2018/063879
(87) International publication number: WO 2018/219845

(56) References cited:
- WO-A1-2011/020170
- WO-A1-2013/178746
- WO-A1-2015/071396
- WO-A1-2016/109196
- US-A1- 2011 118 390
- US-A1- 2013 154 151
- US-A1- 2014 272 370

## Description

The present invention relates to a process for producing a blend of a thermoplastic starch and a polyolefin. Also described is a blend obtained thereby and its use.

Blending highly viscous and low viscous polymer into a well-dispersed polymer/polymer compound is most commonly executed on one twin screw extruder with suitable screw design under suitable compound conditions. One example is the production of a blend of polyethylene (PE) and thermoplastic starch (TPS). The ingredients for the formation of the thermoplastic starch as well as polyethylene and compatibilizer are fed into the throat of a twin screw extruder. In the first part of the extruder TPS is formed by the gelatinization process of native starch, glycerol and additives, while the PE and the compatibilizer are still solid. In the second part of the twin screw extruder the barrel temperature is raised. The PE and the compatibilizer become molten and the TPS phase and the PE phase are mixed intensively into a homogeneous material.

If the viscosity difference between the low molecular weight polymer and the high molecular weight polymer becomes too great, it may not be possible to produce a well-dispersed blend of these polymers. The resulting blend may comprise gels and/or may have inhomogeneous appearance.

This problem becomes more pronounced for the production of a blend on a large scale. High temperature spots tend to appear in a large scale production system, which leads to an inhomogeneous blend.

Adjustment of the screw design of the twin screw extruder is not always sufficient for producing a well-dispersed blend of these polymers, especially for the production on a large scale.

It is an objective of the invention to solve the above-mentioned and/or other problems. The present invention provides a process for producing a blend of a thermoplastic starch and a polyolefin using a first extruder comprising successive zones comprising a first zone, a second zone, a third zone and a fourth zone and a second extruder comprising successive zones comprising a first zone, a second zone, a third zone and a fourth zone, the process comprising the steps of:
1a) introducing a polyolefin and a compatibilizer in the first zone of the first extruder,
1b) melt mixing the polyolefin and the compatibilizer in the second zone of the first extruder,
1c) adding a thermoplastic starch to the mixture of step 1b) in the third zone of the first extruder and
1d) melt-mixing the mixture in the fourth zone of the first extruder to obtain the blend, wherein the thermoplastic starch is produced in the second extruder by a process comprising the steps of:
   2a) introducing starch in the first zone of the second extruder,
   2b) adding a plasticiser to the mixture of step 2a) in the second zone of the second extruder to obtain the thermoplastic starch,
   2c) degassing the thermoplastic starch of step 2b) in the third zone of the second extruder and
   2d) pressurizing the degassed thermoplastic starch of step 2c) in the fourth zone of the second extruder to be added to the third zone of the first extruder.

According to the process of the invention, the thermoplastic starch is produced in a separate extruder (second extruder) from the first extruder, and the first extruder is used for melting the polyolefin and making the blend of the thermoplastic starch and the polyolefin. The formation of the thermoplastic starch has already been completed when it is mixed with the blend of the polyolefin and the compatibilizer. This ensures that a homogeneous composition is obtained.

The production of the thermoplastic starch requires sufficient residence time. The second extruder can advantageously be adjusted independently from the first extruder to ensure sufficient residence time, when the process conditions for producing the thermoplastic starch are to be changed.

The degassing step 2c) reduces the water content in the thermoplastic starch. Performing the degassing step at this stage is more advantageous than performing degassing on a composition comprising both the thermoplastic starch and the polyolefin, such as done in a single extruder. According to the invention, degassing can be performed at a lower temperature in the absence of the polyolefin. In a single extruder, the degassing can only be performed in the presence of all components including polyolefin. The presence of the polyolefin melt requires the temperature of the degassing step to be high, which leads to the risk of the decomposition of the starch. Furthermore, when the temperature is high, the degassing leads to a large amount of vapor to exit from the extruder, which has a risk of the produced blend being pushed out from the extruder. This would block the venting path and the system. According to the process of the invention, this process instability is avoided.

It is noted that US9045625 discloses a continuous process of producing a thermoplastic starch/polymer blend by introducing starch and a plasticizer into a twin-screw extruder to form thermoplastic starch and thereafter introducing dry solid polymer to form the thermoplastic starch/polymer blend. In this process, a thermoplastic starch is first produced in a twin-screw extruder, after which dry solid polymer is introduced. The time for the thermoplastic starch to be formed is limited by the design of the twin-screw extruder. If the formation of the thermoplastic starch has not been completed before the introduction of the solid polymer, the resulting composition may not be homogeneous.

### First extruder

The blend of the polyolefin and the thermoplastic starch is formed in the first extruder. The first extruder comprises successive zones comprising a first zone, a second zone, a third zone and a fourth zone.

A polyolefin and a compatibilizer are introduced in the first zone of the first extruder. The polyolefin and the compatibilizer are melt mixed in the second zone of the first extruder. A thermoplastic starch is added to the melt-mixture of the polyolefin and the compatibilizer in the third zone of the first extruder. The mixture of the polyolefin, the compatibilizer and the thermoplastic starch is melt-mixed in the fourth zone of the first extruder to obtain the thermoplastic starch/polymer blend.

Typical temperatures ranges of the zones during compounding are:
- 1^{st} zone [°C]: 120-130, e.g. 121-129
- 2^{nd} zone [°C]: 130-161, e.g. 138-161
- 3^{rd} zone [°C]: 130-160, e.g. 135-160
- 4^{th} zone [°C]: 130-160, 140-154

The residence time in the first extruder may e.g. be around 1 minute.

### Second extruder

The thermoplastic starch to be mixed with the polyolefin is formed in the second extruder. The second extruder comprises successive zones comprising a first zone, a second zone, a third zone and a fourth zone.

Starch and optional additives are introduced in the first zone of the second extruder. The starch and the optional additives can be introduced separately or as a mixture. Plasticiser is added in the second zone of the second extruder. The conditions of the second zone are selected such that the formation of the thermoplastic starch is completed. For example, the second zone has a temperature of at least 110 °C and the residence time is at least 30 seconds. In the third zone, the formed thermoplastic starch is degassed. In the fourth zone, the degassed thermoplastic starch is moved to the third zone of the first extruder.

Typical temperatures ranges of the zones during compounding are:
- 1^{st} zone [°C]: 70 - 90
- 2^{nd} zone [°C]: 110 - 140
- 3^{rd} zone [°C]: 110 -140
- 4^{th} zone [°C]: 100 - 140

The residence time in the second extruder may e.g. be around 1-2 minutes.

### Polyolefin

The polyolefin is preferably selected from the group consisting of propylene homopolymers, ethylene propylene copolymers, polyethylene such as high density polyethylene, medium density polyethylene, low density polyethylene, linear low density polyethylene and mixtures of at least two of the preceding polyolefins. Preferably the density of the polyolefin is at least 0.910 g/cm³. In a preferred embodiment the polyolefin is polyethylene, in particular low density polyethylene (LDPE).

The amount of the polyolefin is preferably in the range of 10-70 wt%, e.g. 15-50 wt%, based on the blend.

### Compatibilizer

The term "compatibiliser" as used herein is defined as a material having affinity with both the starch phase and the polyolefin phase and which material is able to improve the adhesion of the two phases at the interface so that the thermoplastic phase and the polyolefin phase can co-exist in the same article without the phases becoming physically separated. A compatibiliser suitable for use in the present invention consists of a molecular part which has high affinity and/or miscibility with the thermoplastic starch and a further molecular part which has high affinity and/or miscibility with the polyolefin.

Due to the non-polar nature of the polyolefin phase and the polar nature of the starch phase compatibilisers may be polymer materials having a non-polar backbone and a polar group incorporated in the backbone or grafted thereon. Such polar group may be reactive with respect to the starch and react with at least a part of the starch. Compatibilisers may also be block copolymers having blocks of non-polar and polar monomers.

Examples of suitable compatibilisers include ethylene acrylic acid copolymers, ethylene vinyl acetate copolymers, polyolefins having at least 1 wt% maleic anhydride grafted thereon, ethylene vinyl alcohol copolymers, block saponified polyvinyl acetate, random terpolymers of ethylene, butylacrylate and maleic anhydride, random, partially hydrolised and saponified polyvinylacetate or mixtures of at least two of these compatibilisers.

Preferably, the compatibiliser is selected from the group consisting of ethylene vinyl alcohol copolymers, block saponified polyvinyl acetate and random terpolymers of ethylene, butylacrylate and maleic anhydride and mixtures thereof.

The amount of the compatibiliser is preferably in the range of 3-30 wt% based on the blend. Preferably, the amount of the compatibiliser is 4-15 wt%, more preferably 5-10 wt%, even more preferably 5-7.5 wt% based on the blend.

### Thermoplastic starch

Those skilled in the art will appreciate that thermoplastic starch is a de-structured form of starch comprising one or more plasticisers. Hence, for the avoidance of doubt it should be understood that processing aids, such as plasticisers, required for making thermoplastic starch from starch are considered as part of the thermoplastic starch.

The amount of the thermoplastic starch is preferably in the range of 10-70 wt%, e.g. 50-70 wt%, based on the blend.

### Starch

Starch is found mainly in seeds, fruits, tubers, roots and stem pith of plants, and is a naturally derived polymer made up of repeating glucose groups linked by glucosidic linkages in the 1-4 carbon positions. Starch predominantly consists of amylose, a substantially linear polymer with molecular weight of about 1 x 10⁵ and amylopectin, a highly branched polymer with very high molecular weight of the order 1 x 10⁷.

The starch may be from any suitable starch source such as corn, tapioca, maize, wheat, rice, potato, soy bean or any combination of at least two of these starch sources, potato starch being preferred because of its availability.

Each repeating glucose unit typically has three free hydroxyl groups, thereby providing the polymer with hydrophilic properties and reactive functional groups. Most starches contain 20 to 30% amylose and 70 to 80% amylopectin. However, depending on the origin of the starch the ratio of amylose to amylopectin can vary significantly. For example, some corn hybrids provide starch with 100% amylopectin (waxy corn starch), or progressively higher amylose content ranging from 50 to 95%.

Besides the native form of starch, a chemically modified starch may also be used in the present invention. Chemically modified starch includes, but is not limited to, oxidised starch, etherificated starch, esterified starch or a combination of such chemical modifications (e.g. etherificated and esterified starch). Suitable etherificated starch includes, but is not limited to starch that is substituted with ethyl and/or propyl groups. Suitable esterified starch includes, but is not limited to starch that is substituted with actyl, propanoyl and/or butanoyl groups.

Chemically modified starch is generally prepared by reacting the hydroxyl groups of starch with one or more reagents. The degree of reaction, often referred to as the degree of substitution (DS), can significantly alter the physiochemical properties of the modified starch compared with the corresponding native starch. The DS for a native starch is designated as 0 and can range up to 3 for a fully substituted modified starch. Depending upon the type of substituent and the DS, a chemically modified starch can exhibit considerably different hydrophilic/hydrophobic character relative to native starch.

The amount of the starch may typically be from about 30 to 90 wt%, for example 35 to 80 wt%, 35 to 70 wt%, 35 to 60 wt% or 40 to 50 wt%, relative to the total weight of the starch and the plasticiser.

### Plasticiser

Preferably, the plasticiser is a polyhydric alcohol plasticiser. Suitable examples of the polyhydric alcohols include glycerol, ethylene glycol, propylene glycol, ethylene di-glycol, propylene di-glycol, ethylene tri-glycol, propylene tri-glycol, polyethylene glycol, polypropylene glycol, 1,2-propanediol, 1,3-propanediol, 1,2-butanediol, 1,3-butanediol, 1,4-butanediol, 1,5-pentanediol, 1,6-hexanediol, 1,5-hexanediol, 1,2,6-hexanetriol, 1,3,5-hexanetriol, neo-pentyl glycol, trimethylol propane, pentaerythritol, mannitol, sorbitol, and the acetate, ethoxylate, and propoxylate derivatives thereof.

Preferably, the plasticiser is glycerol and/or sorbitol plasticisers.

The amount of the starch may typically be from about 10 to 70 wt%, for example 20 to 65 wt%, 30 to 65 wt%, 40 to 65 wt% or 50 to 60 wt%, relative to the total weight of the starch and the plasticiser.

### Additives

When present, the amount of the additives may typically be 0.1 to 5 wt% with respect to the blend. Typical additives include fatty acids and stearates, which act as processing aids and viscosity regulators for the thermoplastic starch.

### Blend

Preferably, the amount of the polyolefin is 20 to 80 wt%, for example 25 to 75 wt% or 30 to 70 wt% with respect to the total of the polyolefin and the thermoplastic starch in the blend.

The blend according to the invention mainly consists of polyolefin, thermoplastic starch and compatibiliser, i.e. at least 80 wt% of the blend is polyolefin, thermoplastic starch and compatibiliser. Preferably, at least 90 wt% or at least 95 wt% of the blend is polyolefin, thermoplastic starch and compatibiliser.

The invention further relates to the blend of the thermoplastic starch and the polyolefin obtainable by or obtained by the process according to the invention.

The invention further relates to the blend of the thermoplastic starch and the polyolefin obtainable by or obtained by the process according to the invention, wherein the film produced from the blend may have a clarity of at least 60%, preferably 70%, more preferably 75%.

Also described is an article comprising the blend according to the invention.

The article may be a biaxially stretched film made from the blend.

The invention further relates to a process for producing a biaxially stretched film comprising stretching the blend at elevated temperatures in a machine direction and a transverse direction. Such process is described in detail e.g. in WO2013/178746. The film so-obtained has a multi-layered structure comprising layers of starch and polyolefin. The film has the combination of both low oxygen permeability and low water vapour permeability. Accordingly, suitable examples of the article include food packaging.

The biaxially stretched film may have a thickness e.g. of 2 µm to 250 µm, more typically 5 µm to 100 µm, 20 to 80 µm or 40 to 60 µm.
The biaxially stretched film obtainable by or obtained by the process may have a clarity of at least 60%, preferably 70%, more preferably 75%.

The multi-layer film comprising the biaxially stretched film and a polymer film provided on each side of the biaxially stretched film may have a clarity of at least 60%, preferably 70%, more preferably 75%.
In view of the starch phase, the temperature of the thermoplastic composition while being stretched may not be too high, because a too high temperature will cause yellowing or browning of the thermoplastic starch. The thermoplastic starch may also become brittle at too high temperatures, which is undesirable. A practical upper limit is 130°C. The lower temperature limit for the stretching depends to some extent on the blend, but in general it can be said that the lower limit is determined by the melting and crystallization temperature of the polyolefin phase. A practical lower limit may be 100°C, although a skilled person may easily find the practical lower limit by routine experimentation. Preferably, the stretching of the blend is performed at a temperature above the melting points of both the thermoplastic starch and the polyolefin.

The stretching process for obtaining the film is not limited to a specific stretching process, yet it is preferred to use a film blowing technique, as such techniques are very suitable for making thin films. However, other stretching techniques such as calendaring may also be applied.

The article may also be a multi-layer film comprising the biaxially stretched film and polymer films provided on each side of the biaxially stretched film according to the invention, wherein the polymer films preferably comprise a polyolefin such as polyethylene and a compatibiliser. Suitable examples include the compatibilisers described in relation to the blend according to the invention. Such polymer films may be provided on the biaxially stretched film by means of lamination or co-extrusion prior or after stretching in machine direction and transverse direction.

The multi-layer film may have a thickness e.g. of 2 µm to 250 µm, more typically 5 µm to 100 µm, 20 to 80 µm or 40 to 60 µm. The ratio of the thickness between the biaxially stretched film and the remaining films in the multi-layer film may e.g. be 5:95 to 95:5, for example 40:60 to 60:40. In some embodiments, the multi-layer film has a thickness of 40 to 60 µm and the biaxially stretched film has a thickness of 2 to 25 µm.
It is noted that the invention relates to all possible combinations of features described herein, preferred in particular are those combinations of features that are present in the claims. It will therefore be appreciated that all combinations of features relating to the blend all combinations of features relating to the process according to the invention and all combinations of features relating to the blend and features relating to the process according to the invention are described herein.

It is further noted that the term 'comprising' does not exclude the presence of other elements. However, it is also to be understood that a description on a product/blend comprising certain components also discloses a product/blend consisting of these components. The product/blend consisting of these components may be advantageous in that it offers a simpler, more economical process for the preparation of the product/composition. Similarly, it is also to be understood that a description on a process comprising certain steps also discloses a process consisting of these steps. The process consisting of these steps may be advantageous in that it offers a simpler, more economical process.

When values are mentioned for a lower limit and an upper limit for a parameter, ranges made by the combinations of the values of the lower limit and the values of the upper limit are also understood to be disclosed.

US 2014/272370 deals with a compatibilized thermoplastic polymer composition having from 5% to 95% bio-based content and comprising thermoplastic starch; polyolefin; and an effective amount of compatibilizer.

WO 2015/071396 relates to biaxially stretched article obtained by stretching a thermoplastic composition in a machine direction and a transverse direction at elevated temperature.

WO 2011/020170 deals with a process of producing a thermoplastic starch/polymer blend which involves introducing dry starch into a twin-screw extruder.

US 2011/118390 describes a process to obtain plasticization of a starchy component by a plasticizer and a homogeneous mixture of the synthetic polymer and of the plasticized starchy component. A reactor may especially be a co-rotating or counterrotating single-screw or twin-screw extruder, for example a co-rotating twin-screw extruder.

WO 2016/109196 discloses a multilayered article comprising a core layer comprising a thermoplastic polymer; where the thermoplastic polymer comprises a polyolefin, thermoplastic starch and a compatibilizer.

US 2013/154151 provides a method for forming a thermoplastic composition that contains a combination of a renewable biopolymer with a polyolefin.

The invention is now elucidated by way of the following examples, without however being limited thereto.

### Experiments

Blends of an LDPE and a thermoplastic starch were prepared by a twin-screw extruder from components as shown in Table 1.

A three layer blown film was prepared using this blend as the middle layer. The outer layers of the three layer blown film consist of a dry blend of LDPE and a compatibilizer which is a random terpolymer of ethylene, bytylarcylate and maleic anhydride (Lotader 3410). The temperature of the extruders (feeding the separate materials to the blow extruder) was 125-140-135-130-130°C at a screw speed of 50 rpm, line speed of 9 m/min and throughput rate of about 20 kg/hr. The blow up rate (BUR) of all the three layer materials was 3.

In comparative experiments A-D and E-G, the blend of LDPE and thermoplastic starch was produced on a single twin screw extruder. The screw type, the ratio between the length and the diameter of the extruder and throughput were varied in comparative experiments A-D and in comparative experiments E-G.

In comparative experiments A-D, the melt index was 1.1 dg/min to 3.2 dg/min. Visual inspection of the film revealed that the obtained blend in the middle layer was clear, but inhomogeneous and had a coarse morphology structure for all experiments.

In comparative experiments E-G, the melt index was 25.5 dg/min to 33.3 dg/min. Visual inspection of the film revealed that the clarity and homogeneity of the obtained blend in the middle layer was better than in comparative experiments A-D but still the obtained blend was not sufficiently homogeneous for all cases.

In the examples 1-6 according to the invention, the blend was produced on a double twin screw extruder system according to the invention. In all examples, the middle layer was clear and had a well-dispersed homogeneous structure.

**Table 1**

| Components (wt%) | Comp. Ex. A - D and Examples 1-3 | Comp. ex. E - G and Examples 4-6 |
|---|---|---|
| LDPE | 22.8 | 22.8 |
| Starch | 38 | 32.6 |
| Glycerol | 30.1 | 36 |
| compatibiliser (Lotader 3410) | 5.3 | 5.3 |
| Additives | 3.8 | 3.3 |
| Total | 100 | 100 |

Clarity measurements were performed on the films at 23°C and 50% RH. The measurements were done on equipment from BYK-Gardner GmbH. The method is based on ASTM D1746. In contrast to ASTM D1746, BYK defines small angle scattering as the amount of light which scatters (after passing through a film sample) by no more than 2,5°, while ASTM D1767 uses an angle of 0,1°. However, all other features are as described in ASTM D1746.

**Table 2**

| Example | Clarity in % |
|---|---|
| 1 | 77,0 |
| 2 | 82,9 |
| 3 | 88,0 |
| 4 | 81,1 |
| 5 | 80,4 |
| 6 | 76,7 |
| A | 29,6 |
| B | 24,9 |
| C | 24,0 |

From Table 2 it can clearly be seen that the inventive examples 1-6 show a much higher clarity compared to the comparative examples A-C.

## Claims

1. A process for producing a blend of a thermoplastic starch and a polyolefin using a first extruder comprising successive zones comprising a first zone, a second zone, a third zone and a fourth zone and a second extruder comprising successive zones comprising a first zone, a second zone, a third zone and a fourth zone, the process comprising the steps of:
1a) introducing a polyolefin and a compatibilizer in the first zone of the first extruder,
1b) melt mixing the polyolefin and the compatibilizer in the second zone of the first extruder,
1c) adding a thermoplastic starch to the mixture of step 1b) in the third zone of the first extruder and
1d) melt-mixing the mixture of step 1c) in the fourth zone of the first extruder to obtain the blend,
wherein the thermoplastic starch is produced in the second extruder by a process comprising the steps of:
2a) introducing starch in the first zone of the second extruder,
2b) adding a plasticiser to the mixture of step 2a) in the second zone of the second extruder to obtain the thermoplastic starch,
2c) degassing the thermoplastic starch of step 2b) in the third zone of the second extruder and
2d) pressurizing the degassed thermoplastic starch of step 2c) in the fourth zone of the second extruder to be moved to the third zone of the first extruder.

2. The process according to claim 1, wherein the amount of the polyolefin is 10 to 70 wt% based on the blend, the amount of the compatibiliser is 3 to 30 wt% based on the blend and/or the amount of the thermoplastic starch is 10 to 70 wt% based on the blend.

3. The process according to any one of the preceding claims, wherein the polyolefin is selected from the group consisting of propylene homopolymers, ethylene propylene copolymers, polyethylene such as high density polyethylene, medium density polyethylene, low density polyethylene, linear low density polyethylene and mixtures of at least two of the foregoing polyolefins.

4. The process according to any one of the preceding claims, wherein the compatibiliser is selected from ethylene acrylic acid copolymers, ethylene vinyl acetate copolymers, polyolefins having at least 1 wt% maleic anhydride grafted thereon, ethylene vinyl alcohol copolymers, block saponified polyvinyl acetate, random terpolymers of ethylene, butylacrylate and maleic anhydride, random, partially hydrolised and saponified polyvinylacetate and mixtures of at least two of these compatibilisers.

5. The process according to any one of the preceding claims, wherein the amount of the starch is about 30 to 90 wt%, for example 35 to 80 wt%, 35 to 70 wt%, 35 to 60 wt% or 40 to 50 wt%, relative to the total weight of the starch and the plasticiser.

6. The process according to any one of the preceding claims, wherein the plasticiser is glycerol and/or sorbitol plasticiser.

7. The process according to any one of the preceding claims, wherein step 2c) is performed at a temperature of 110 to 140 ºC.

8. The process according to any one of the preceding claims, wherein the first extruder is a twin screw extruder and the second extruder is a twin screw extruder.

9. A process for producing a biaxially stretched film, comprising the process for producing the blend according to any one of claims 1-8 and stretching the blend at elevated temperatures in a machine direction and a transverse direction.

## Patentansprüche

1. Verfahren zum Erzeugen eines Gemischs aus einer thermoplastischen Stärke und einem Polyolefin unter Verwendung eines ersten Extruders, umfassend aufeinanderfolgende Zonen, umfassend eine erste Zone, eine zweite Zone, eine dritte Zone und eine vierte Zone, und eines zweiten Extruders, umfassend aufeinanderfolgende Zonen, umfassend eine erste Zone, eine zweite Zone, eine dritte Zone und eine vierte Zone, wobei das Verfahren die folgenden Schritte umfasst:
1a) Einführen eines Polyolefins und eines Verträglichkeitsvermittlers in der ersten Zone des ersten Extruders,
1b) Schmelzmischen des Polyolefins und des Verträglichkeitsvermittlers in der zweiten Zone des ersten Extruders,
1c) Zugeben einer thermoplastischen Stärke zu der Mischung aus Schritt 1b) in der dritten Zone des ersten Extruders und
1d) Schmelzmischen der Mischung aus Schritt 1c) in der vierten Zone des ersten Extruders, um das Gemisch zu erhalten,
wobei die thermoplastische Stärke in dem zweiten Extruder durch ein Verfahren erzeugt wird, das die folgenden Schritte umfasst:
2a) Einführen von Stärke in der ersten Zone des zweiten Extruders,
2b) Zugeben eines Weichmachers zu dem Gemisch aus Schritt 2a) in der zweiten Zone des zweiten Extruders, um die thermoplastische Stärke zu erhalten,
2c) Entgasen der thermoplastischen Stärke aus Schritt 2b) in der dritten Zone des zweiten Extruders und
2d) Druckbeaufschlagen der entgasten thermoplastischen Stärke aus Schritt 2c) in der vierten Zone des zweiten Extruders, um zu der dritten Zone des ersten Extruders bewegt zu werden.

2. Verfahren nach Anspruch 1, wobei die Menge des Polyolefins 10 bis 70 Gew.-% basierend auf dem Gemisch beträgt, die Menge des Verträglichkeitsvermittlers 3 bis 30 Gew.-% basierend auf dem Gemisch beträgt und/oder die Menge der thermoplastischen Stärke 10 bis 70 Gew.-% basierend auf dem Gemisch beträgt.

3. Verfahren nach einem der vorhergehenden Ansprüche, wobei das Polyolefin ausgewählt ist aus der Gruppe bestehend aus Propylen-Homopolymeren, Ethylen-Propylen-Copolymeren, Polyethylen wie z. B. Polyethylen hoher Dichte, Polyethylen mittlerer Dichte, Polyethylen niedriger Dichte, linearem Polyethylen mit niedriger Dichte und Mischungen aus mindestens zwei der vorhergehenden Polyolefine.

4. Verfahren nach einem der vorhergehenden Ansprüche, wobei der Verträglichkeitsvermittler ausgewählt ist aus Ethylen-Acrylsäure-Copolymeren, EthylenVinylacetat-Copolymeren, Polyolefinen mit mindestens 1 Gew.-% Maleinsäureanhydrid aufgepfropft, Ethylen-Vinylalkohol-Copolymeren, verseiftem Block-Polyvinylacetat, zufälligen Terpolymeren von Ethylen, Butylacrylat und Maleinsäureanhydrid, zufälligem, partiell hydrolysiertem und verseiftem Polyvinylacetat und Mischungen von mindestens zwei dieser Verträglichkeitsvermittler.

5. Verfahren nach einem der vorhergehenden Ansprüche, wobei die Menge der Stärke etwa 30 bis 90 Gew.-% beträgt, zum Beispiel 35 bis 80 Gew.-%, 35 bis 70 Gew.-%, 35 bis 60 Gew.-% oder 40 bis 50 Gew.-%, relativ zu dem Gesamtgewicht der Stärke und des Weichmachers.

6. Verfahren nach einem der vorhergehenden Ansprüche, wobei der Weichmacher Glycerol- und/oder Sorbitol-Weichmacher ist.

7. Verfahren nach einem der vorhergehenden Ansprüche, wobei Schritt 2c) bei einer Temperatur von 110 bis 140 °C durchgeführt wird.

8. Verfahren nach einem der vorhergehenden Ansprüche, wobei der erste Extruder ein Doppelschneckenextruder und der zweite Extruder ein Doppelschneckenextruder ist.

9. Verfahren zum Erzeugen einer biaxial gestreckten Folie, umfassend das Verfahren zum Erzeugen des Gemischs nach einem der Ansprüche 1-8 und Strecken des Gemischs bei erhöhten Temperaturen in eine Maschinenrichtung und eine Querrichtung.

## Revendications

1. Procédé de fabrication d'un mélange d'un amidon thermoplastique et d'une polyoléfine à l'aide d'une première extrudeuse comprenant des zones successives comprenant une première zone, une deuxième zone, une troisième zone et une quatrième zone et une deuxième extrudeuse comprenant des zones successives comprenant une première zone, une deuxième zone, une troisième zone et une quatrième zone, le procédé comprenant les étapes consistant à :
1a) introduire une polyoléfine et un agent de compatibilité dans la première zone de la première extrudeuse,
1b) mélanger à l'état fondu la polyoléfine et l'agent de compatibilité dans la deuxième zone de la première extrudeuse,
1c) ajouter un amidon thermoplastique au mélange de l'étape 1b) dans la troisième zone de la première extrudeuse et
1d) mélanger à l'état fondu le mélange de l'étape 1c) dans la quatrième zone de la première extrudeuse pour obtenir le mélange,
dans lequel l'amidon thermoplastique est produit dans la seconde extrudeuse par un procédé comprenant les étapes consistant à :
2a) introduire de l'amidon dans la première zone de la seconde extrudeuse,
2b) ajouter un plastifiant au mélange de l'étape 2a) dans la deuxième zone de la deuxième extrudeuse pour obtenir l'amidon thermoplastique,
2c) dégazer l'amidon thermoplastique de l'étape 2b) dans la troisième zone de la deuxième extrudeuse et
2d) mettre sous pression l'amidon thermoplastique dégazé de l'étape 2c) dans la quatrième zone de la deuxième extrudeuse à déplacer à la troisième zone de la première extrudeuse.

2. Procédé selon la revendication 1, dans lequel la quantité de polyoléfine est de 10 à 70% en poids sur la base du mélange, la quantité d'agent de compatibilité est de 3 à 30% en poids sur la base du mélange et / ou la quantité d'amidon thermoplastique est de 10 à 70% en poids sur la base du mélange.

3. Procédé selon l'une quelconque des revendications précédentes, dans lequel la polyoléfine est choisie dans le groupe constitué par les homopolymères de propylène, les copolymères d'éthylène propylène, le polyéthylène tel que le polyéthylène haute densité, le polyéthylène moyenne densité, le polyéthylène basse densité, le polyéthylène linéaire basse densité et des mélanges d'au moins deux des polyoléfines précédentes.

4. Procédé selon l'une quelconque des revendications précédentes, dans lequel l'agent de compatibilité est choisi parmi les copolymères d'acide acrylique d'éthylène, les copolymères d'acétate de vinyle d'éthylène, les polyoléfines sur lesquelles est greffé au moins 1% en poids d'anhydride maléique, les copolymères d'alcool vinylique d'éthylène, l'acétate polyvinylique à blocs saponifiés , des terpolymères aléatoires d'éthylène, d'acrylate de butyle et d'anhydride maléique, le polyacétate de vinyle aléatoire, partiellement hydrolysé et saponifié et des mélanges d'au moins deux de ces agents de compatibilité.

5. Procédé selon l'une quelconque des revendications précédentes, dans lequel la quantité d'amidon est d'environ 30 à 90% en poids, par exemple 35 à 80% en poids, 35 à 70% en poids, 35 à 60% en poids ou 40 à 50% en poids, par rapport au poids total de l'amidon et du plastifiant.

6. Procédé selon l'une quelconque des revendications précédentes, dans lequel le plastifiant est le glycérol et / ou un plastifiant de sorbitol.

7. Procédé selon l'une quelconque des revendications précédentes, dans lequel l'étape 2c) est réalisée à une température de 110 à 140 °C.

8. Procédé selon l'une quelconque des revendications précédentes, dans lequel la première extrudeuse est une extrudeuse à deux vis et la seconde extrudeuse est une extrudeuse à deux vis.

9. Procédé de production d'un film étiré biaxialement, comprenant le procédé de production du mélange selon l'une quelconque des revendications 1 à 8 et d'étirage du mélange à des températures élevées dans une direction machine et une direction transversale.
